# EUROPÄISCHE PATENTSCHRIFT

(11) **EP 0 909 578 B1**
(45) Veröffentlichungstag und Bekanntmachung des Hinweises auf die Patenterteilung: **21.03.2001**
(21) Anmeldenummer: 98119082.0
(22) Anmeldetag: 09.10.1998
(51) Int. Cl.: B01D 53/79, F23J 15/00, F23L 15/04, F02G 5/00, F23J 15/04, F24H 8/00

(54) **Verfahren und Vorrichtung zur Konditionierung eines verbrennenden Gases und eines Abgases**
Process and apparatus for conditioning a gas to be combusted and an exhaust gas
Procédé et dispositif pour conditionner un gaz à brûler et un gaz d'échappement

(30) Priorität: 18.10.1997 DE 19746129
(43) Veröffentlichungstag der Anmeldung: 21.04.1999
(73) Patentinhaber: RÖSSLE, Gottfried, D-71640 Ludwigsburg (DE)
(72) Erfinder: RÖSSLE, Gottfried, D-71640 Ludwigsburg (DE)
(74) Vertreter: KOHLER SCHMID + PARTNER

(56) Entgegenhaltungen:
- FR-A- 2 605 720
- FR-A- 2 636 129
- FR-A- 2 703 136

## Beschreibung

Die Erfindung betrifft ein Verfahren zur Konditionierung eines Verbrennungsgases, insbesondere von Verbrennungsluft, und eines Abgases, die jeweils einer Heizeinrichtung oder Verbrennungskraftmaschine zu- bzw. von dieser abgeführt werden, wobei das Verbrennungsgas durch einen ersten Raum und das Abgas durch einen mit dem ersten Raum kommunizierend verbundenen zweiten Raum jeweils oberhalb der Verbindung beider Räume hindurchgeleitet und dabei mit einer sich unten in den Räumen befindenden Flüssigkeit besprüht werden, deren Flüssigkeitsniveau auf einem Niveau höher als die Verbindung gehalten wird, sowie eine Vorrichtung zur Konditionierung eines Verbrennungsgases, insbesondere von Verbrennungsluft, und eines Abgases, die jeweils einer Heizeinrichtung oder Verbrennungskraftmaschine zu- bzw. von dieser abgeführt werden, mit zwei über eine Verbindung miteinander kommunizierend verbundenen Räumen, wobei das Verbrennungsgas durch den einen (ersten) Raum und das Abgas durch den anderen (zweiten) Raum jeweils oberhalb der Verbindung hindurchgeleitet und dabei mittels einer Sprüheinrichtung mit einer sich unten in den Räumen befindenden Flüssigkeit besprüht werden, deren Flüssigkeitsniveau auf einem Niveau höher als die Verbindung gehalten wird.

Im folgenden wird unter Konditionierung allgemein das Behandeln eines Verbrennungsgases oder eines Abgases verstanden, um die Verbrennungs- und Abgasverhältnisse einer Heizeinrichtung, insbesondere eines Heizkessels, oder einer Verbrennungskraftmaschine, insbesondere eines Dieselmotors, zu verbessern.

Ein derartiges Konditionierungsverfahren und eine derartige Konditionierungsvorrichtung sind z.B. durch die FR-A-26 36 129 bekanntgeworden.

Im Abgas aus einem Verbrennungsprozeß ist Wasserdampf enthalten, der sich insbesondere bei der Verbrennung von Kohlenwasserstoffen bildet, aus welchen im wesentlichen Brennstoffe wie Erdgas und Mineralöl bestehen. Bei Verbrennung eines Liters Heizöl entsteht beispielsweise Wasserdampf mit einem Äquivalent von einem Liter flüssigem Wasser. Dieses Wasser geht normalerweise in der Dampfform ungenutzt als Bestandteil des Abgases in die Atmosphäre. Bei der sogenannten Brennwertnutzung wird das Abgas aus dem Verbrennungsprozeß so weit herabgekühlt, daß der enthaltene Wasserdampf verflüssigt und die dabei freigesetzte Verdampfungswärme nutzbar gemacht wird.

Aus der FR-A-26 36 129 ist eine Vorrichtung zum Befeuchten von Frischluft bekannt, bei der trockene Luft von unten nach oben durch einen ersten Waschturm strömt, ehe sie in einen Brennraum gelangt. Die heißen und feuchten Abgase des Brennraums durchströmen einen zweiten Waschturm, ehe sie ins Freie gelangen. Das sich am Boden des zweiten Waschturms sammelnde Kondensat wird über eine Leitung zum oberen Ende des ersten Waschturms gepumpt und dort eingedüst. Das Kondensat des ersten Waschturms wird entsprechend in den zweiten Waschturm eingedüst. Die Böden der Waschtürme sind durch eine Leitung zum Ausgleich der Kondensatpegel verbunden.

In der DE 41 11 298 A1 ist vorgeschlagen worden, die Wärme des Abgases auf die Verbrennungsluft zu übertragen. Die Vorwärmung einer Verbrennungsluft mit der Abgaswärme mittels eines Wärmetauschers ist bekannt. Wegen des Wärmedurchgangswiderstandes der Wärmetauscherwände kann über den Wärmetauscher kein vollständiger Temperaturausgleich zwischen Abgas und Verbrennungsluft erreicht werden (Problem der sog. Grätigkeit).

In der nachveröffentlichten deutschen Patentanmeldung
DE 196 43 866 A1 ist vorgeschlagen, das Abgas ohne Wärmetauscher, aber mit einem eingedüsten flüssigen Sprühmittel niedriger Temperatur, im wesentlichen bestehend aus dem verflüssigten Wasserdampf des Abgases (im folgenden als "Kondensat" bezeichnet) zu kühlen. Das sich dabei erwärmende Sprühmittel wird während seines Kreislaufs durch einen Wärmetauscher geführt, in welchem seine Wärme auf die Verbrennungsluft übertragen wird. Allerdings können die feststofflichen Verunreinigungen, z.B. die Abgaspartikel eines Dieselmotors, einen Schlamm bilden, der sich insbesondere auch im Wärmetauscher, ablagern und dadurch die Funktion des Wärmetauschers beeinträchtigen kann. Daher ist dieses Verfahren nur für solche Brennstoffe geeignet, die keine Verschmutzung verursachen.

Der vorliegenden Erfindung liegt daher die Aufgabe zugrunde, ein Verfahren und eine Vorrichtung der jeweils eingangs genannten Art dahingehend weiterzubilden, daß ein verbesserter Wärmeausgleich zwischen Abgas und Verbrennungsgas erreicht werden kann.

Diese Aufgabe wird bei dem eingangs genannten Verfahren erfindungsgemäß dadurch gelöst, daß das Verbrennungsgas und/oder das Abgas jeweils mehrere Teilräume des ersten bzw. zweiten Raumes etwa vertikal nacheinander durchströmt, wobei die Strömungsrichtungen in nacheinander durchströmten Teilräumen eines Raumes jeweils einander entgegengesetzt sind.

So können das Verbrennungsgas und das Abgas mehrere verschiedene Behandlungsstufen durchlaufen. Zum Beispiel können Verbrennungsgas und Abgas in einem Teilraum zunächst im Gegenstrom und dann in einem nachfolgenden Teilraum im Gleichstrom mit der Flüssigkeit besprüht werden und dann in einem weiter nachfolgenden Teilraum einer Tröpfchenabscheidung unterworfen werden, bevor sie aus dem jeweiligen Raum ausströmen.

Indem das (kalte) Verbrennungsgas während seiner Passage durch den ersten Raum vorzugsweise fortwährend besprüht wird, treten im wesentlichen die folgenden vier Wirkungen ein:
1. Die in der (wärmeren) Sprühflüssigkeit enthaltene Wärme geht auf das durchströmende Verbrennungsgas über. Die Sprühflüssigkeit wird gekühlt, das Verbrennungsgas erwärmt.
2. Von dem Verbrennungsgas wird dampfförmiges Wasser aus der Sprühflüssigkeit aufgenommen. Die hierzu benötigte Verdampfungswärme wird dem Verbrennungsgas und der Sprühflüssigkeit entnommen. Das Verbrennungsgas kann dadurch mehr Wärme aufnehmen, die Sprühflüssigkeit mehr Wärme abgeben.
3. Von dem Verbrennungsgas wird Wasserdampf aus der Sprühflüssigkeit aufgenommen. Die dabei entstehende Verdampfungswärme wird dem Verbrennungsgas entzogen, so daß die Temperaturzunahme des Verbrennungsgases herabgesetzt wird. Das Verbrennungsgas wird befeuchtet, und die Sprühflüssigkeit nimmt mengenmäßig ab.
4. Die in dem Verbrennungsgas, z.B. in der Außenluft, enthaltenen Partikel werden durch die Sprühflüssigkeit herausgewaschen.

Das Verbrennungsgas verläßt den ersten Raum erwärmt, befeuchtet und gereinigt.

Indem das (warme) Abgas während seiner Passage durch den zweiten Raum vorzugsweise fortwährend besprüht wird, treten im wesentlichen die folgenden vier Wirkungen ein:
1. Die im Abgas enthaltene fühlbare Wärme geht auf die (kältere) Flüssigkeit über. Das Abgas wird gekühlt und die Sprühflüssigkeit erwärmt.
2. Die im Abgas enthaltene latente Wärme, d.h. die Verdampfungswärme des im Abgas mitgeführten Wasserdampfes, geht auf die Sprühflüssigkeit über. Das Abgas kann dadurch mehr Wärme abgeben, die Sprühflüssigkeit mehr Wärme aufnehmen.
3. Der im Abgas enthaltene Wasserdampf verflüssigt sich. Das Abgas wird entfeuchtet und die Sprühflüssigkeit mit Wasser angereichert.
4. Die im Abgas enthaltenen Partikel werden durch die Sprühflüssigkeit herausgewaschen.

Das Abgas verläßt den zweiten Raum gekühlt, entfeuchtet und gereinigt.

Über die kommunizierend miteinander verbundenen Räume ergibt sich ein Flüssigkeitskreislauf, so daß mit der zum Besprühen in beiden Räumen verwendeten gemeinsamen Flüssigkeit ein wirkungsvoller Wärmeaustausch zwischen Verbrennungsgas und Abgas erzielt wird. Durch geeignete Wahl der Sprühflüssigkeit, im allgemeinen durch gezielte Zugabe von Chemikalien ins Sprühwasser, können - je nach Anforderung - entsprechende Stoffe gezielt auf chemischem Wege aus dem Abgas ausgewaschen werden.

Um einen möglichst effektiven Wärmeaustausch zwischen Flüssigkeit und Verbrennungsgas bzw. Abgas zu erreichen, wird bzw. werden das Verbrennungsgas und/oder das Abgas bezüglich der Sprührichtung der Flüssigkeit im Gegenstrom durch den Raum geleitet.

Bei besonders vorteilhaften Verfahrensausgestaltungen wird die in den Räumen befindliche Flüssigkeit, insbesondere nahe ihres Flüssigkeitsspiegels, abgeleitet. Die mit Partikeln angereicherte Flüssigkeit kann beispielsweise in eine Abwasserkanalisation eingeleitet werden, oder sie kann zur Wasseremulsionierung z.B. des Brennöls für einen Dieselmotor verwendet werden.

Damit sich die in der Flüssigkeit befindlichen Partikel nicht innerhalb den Räumen ablagern, ist in bevorzugter Ausgestaltung des Verfahrens vorgesehen, daß die in den Räumen befindliche Flüssigkeit in ständiger Bewegung gehalten wird.

Bei schwefelhaltigen Mineralölen führt das Besprühen des Abgases zu einer sauren Flüssigkeit, die nicht in die Kanalisation abgeleitet werden darf. Vorzugsweise wird daher die Flüssigkeit, zumindest bevor sie abgeleitet wird, in einer Neutralisationseinrichtung neutralisiert.

Bei ganz besonders bevorzugten Ausgestaltungen des Konditionierungsverfahrens ist die Flüssigkeit extern abkühlbar, wobei unter "extern" nicht die (interne) Abkühlung der Flüssigkeit durch das Verbrennungsgas, sondern die Abkühlung durch zusätzliche Einrichtungen wie z.B. Wärmetauscher verstanden wird. Durch geregeltes externes Abkühlen der Flüssigkeit kann die Temperatur des Verbrennungsgases, zumindest in gewissen Grenzen, beliebig eingestellt werden.

Die oben genannte Aufgabe wird bei einer Vorrichtung der eingangs genannten Art erfindungsgemäß dadurch gelöst, daß die beiden Räume einen gemeinsamen Boden aufweisen und daß einer oder beide Räume in mehrere, etwa vertikal verlaufende Teilräume unterteilt sind, die vom Verbrennungsgas bzw. vom Abgas nacheinander, insbesondere schlangenlinienförmig, durchströmt werden.

So können Verbrennungsgas und Abgas zunächst im Gegenstrom und dann im Gleichstrom mit der Flüssigkeit besprüht werden und dann z.B. im letzten Teilraum einer Tröpfchenabscheidung unterworfen werden, bevor sie aus dem jeweiligen Raum ausströmen.

Die erfindungsgemäße Konditionierungsvorrichtung kann durch zwei vorzugsweise senkrechte Hohlprofilen (z.B. Rohre mit rechteckigem oder rundem Querschnitt) gebildet sein, die in der Weise miteinander verbunden sind, daß bei teilweiser Befüllung mit der Flüssigkeit die Flüssigkeitssäulen in beiden Hohlprofilen miteinander kommunizieren. Die den Sprüheinrichtungen zugeführte Flüssigkeit wird den Räumen vorzugsweise in Bodennähe entnommen. Der gemeinsame Boden ist Teil der Verbindung zwischen beiden Räumen. Beide Räume haben daher einen gemeinsamen Flüssigkeits-"Sumpf", dem die den Sprüheinrichtungen zugeführte Flüssigkeit bevorzugt entnommen wird.

Da das warme Abgas innerhalb des zweiten Raumes aufzusteigen versucht, ist in diesem Raum der Einlaß für das Abgas bevorzugt unterhalb des Auslasses angeordnet.

Die Sprüheinrichtung kann sich an beliebiger Stelle im Raum befinden, vorzugsweise ist sie allerdings oberhalb des jeweils höher liegenden Ein- oder Auslasses für das Verbrennungsgas bzw. für das Abgas angeordnet, so daß Flüssigkeit nach unten in den jeweiligen Raum eingesprüht (gedüst) wird.

Um die mit Partikeln angereicherte Flüssigkeit z.B. in die Abwasserkanalisation abzuleiten, ist in zumindest einem der Räume eine Überlaufleitung vorgesehen, die sich zwischen der Verbindung und dem jeweils am tiefsten liegenden Ein- oder Auslaß für das Verbrennungsgas bzw. für das Abgas befindet. Diese Überlaufleitung kann auch zur automatischen Begrenzung der maximalen Flüssigkeitshöhe in den Räumen dienen.

Über eine Kreislaufleitung wird der jeweiligen Sprüheinrichtung die in den Räumen , vorzugsweise unten im Flüssigkeitssumpf, befindliche Flüssigkeit zugeführt.

Bei einer ganz besonders vorteilhaften Ausführungsform ist zumindest die in den Räumen befindliche Flüssigkeit in Bewegung haltende Bewegungseinrichtung vorgesehen, womit einer Ablagerung von Partikeln innerhalb der Konditionierungsvorrichtung und insbesondere innerhalb den Räumen entgegengewirkt wird.

Als bevorzugte Weiterbildung dieser Ausführungsform kann als Bewegungseinrichtung eine in einen oder in beide Räume mündende Zirkulationsleitung vorgesehen sein, über die dem bzw. den Räumen entnommene Flüssigkeit, vorzugsweise im Kreislauf, den Räumen wieder zugeleitet wird. Die z.B. mit einer Umwälzpumpe ausgerüstete Zirkulationsleitung hält die in den Räumen und in den Leitungen strömende Flüssigkeit in Bewegung und verhindert dadurch das Absetzen von Partikeln.

Um die Flüssigkeit je nach Bedarf extern abkühlen und damit die Temperatur des Verbrennungsgases einstellen zu können, ist ein Wärmetauscher vorgesehen, über den die Flüssigkeit zum Abkühlen leitbar ist.

Der Platzbedarf der erfindungsgemäßen Konditionierungsvorrichtung kann reduziert werden, wenn die beiden Räume durch eine gemeinsame Trennwand voneinander getrennt sind.

Zur Platzeinsparung können die mehreren Teilräume schachbrettartig nebeneinander angeordnet sein, wobei sie bevorzugt gemeinsame Trennwände mit entsprechenden Verbindungsöffnungen haben. Aber auch eine lineare Anordnung der Teilräume hintereinander und/oder eine Verbindung der einzelnen Teilräume über Leitungen sind möglich.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Die Erfindung ist im Ausführungsbeispiel in der Zeichnung dargestellt und wird in der nachfolgenden Beschreibung näher erläutert. Es zeigt:
- Fig. 1: stark schematisiert einen Schnitt durch eine Konditionierungsvorrichtung, an Hand derer das grundsätzliche Funktionsprinzip erklärt werden soll, nach dem auch die erfindungsgemäße Vorrichtung funktioniert.
- Fig. 2: stark schematisiert einen Schnitt durch ein Ausführungsbeispiel einer erfindungsgemäßen Konditionierungsvorrichtung; und
- Fig. 3: den waagerechten Querschnitt der in Fig. 2 dargestellten Konditionierungsvorrichtung entsprechend der Schnittlinie III-III.

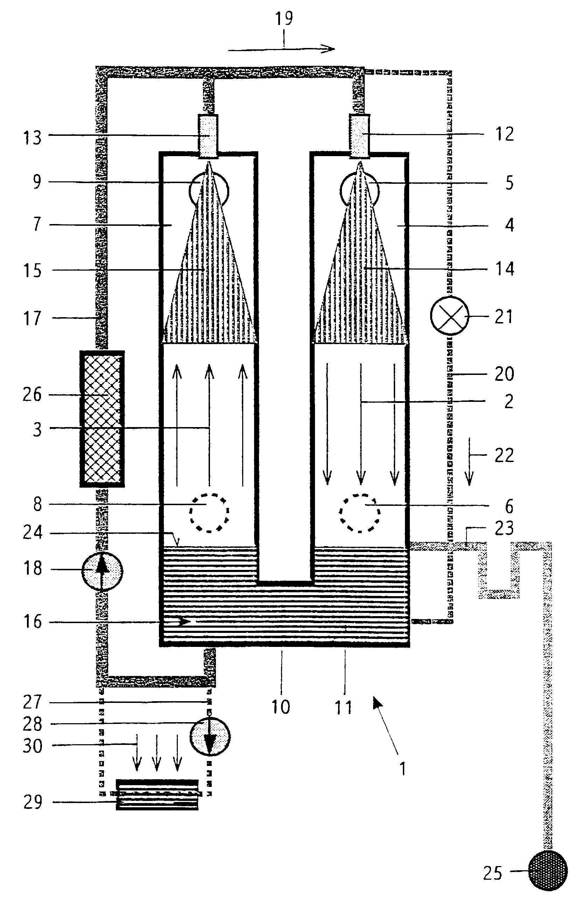

Die in Fig. 1 mit 1 bezeichnete Konditionierungsvorrichtung dient der Konditionierung sowohl eines Verbrennungsgases 2, z.B. Verbrennungsluft oder Brenngas, als auch eines Abgases 3 einer Heizeinrichtung oder Verbrennungskraftmaschine (nicht gezeigt).

Die Konditionierungsvorrichtung 1 weist zwei Räume 4, 7 in Form von senkrechten Hohlprofilen (Rohre) mit rundem oder mehreckigem Querschnitt auf. In den ersten Raum 4 wird das Verbrennungsgas 2 über einen oberen Einlaß 5 ein- und über einen tiefer gelegenen unteren Auslaß 6 wieder ausgeleitet. In dem zweiten Raum 7 wird das Abgas 3 über einen unteren Einlaß 8 ein- und über einen höher gelegenen oberen Auslaß 9 wieder ausgeleitet. Die Strömungsrichtungen von Verbrennungsgas 2 und Abgas 3 in den beiden Räumen 4, 7 sind durch Strömungspfeile angedeutet. Die beiden Räume 4, 7 sind über eine Verbindung 10 miteinander kommunizierend verbunden, wobei sie nach unten durch einen gemeinsamen Boden 11 abgeschlossen sind.

In jedem Raum 4, 7 ist oberhalb des jeweils höher gelegenen Einlasses 5 bzw. Auslasses 9 eine Sprüheinrichtung 12 bzw. 13 vorgesehen, über die eine Flüssigkeit 14, 15 großflächig nach unten eingesprüht bzw. eingedüst wird. Diese eingesprühte Flüssigkeit 14, 15 sammelt sich unten in einem Flüssigkeits-"Sumpf" 16. Bei der in den Räumen 4, 7 stehenden Flüssigkeit handelt es sich um Kondensat aus dem Verbrennungsprozeß, welches ständig durch Wasser aus der Verbrennung der Kohlenwasserstoffe angereichert und erneuert wird. Im Ausführungsbeispiel wird das Verbrennungsgas 2 im Gleichstrom und das Abgas 3 im Gegenstrom bezüglich der Sprührichtung der Flüssigkeit 14, 15 durch die Räume 4, 7 geleitet.

Dem Flüssigkeitssumpf 16 wird über eine Kreislaufleitung 17 mittels einer Pumpe 18 Flüssigkeit in Pfeilrichtung 19 entnommen und den Sprüheinrichtungen 12, 13 zugeführt, so daß sich ein in sich geschlossener Flüssigkeitskreislauf ergibt.

Indem das auf Umgebungstemperatur befindliche (kalte) Verbrennungsgas (Außenluft) 2 während seiner Passage durch den ersten Raum 4 fortwährend besprüht wird, wird die eingesprühte Flüssigkeit 14 gekühlt und das Verbrennungsgas 2 erwärmt. Weiterhin geht die in der (wärmeren) eingesprühten Flüssigkeit 14 enthaltene Wärme auf das durchströmende Verbrennungsgas 2 über und wird vom Verbrennungsgas 2 dampfförmiges Wasser aus der eingesprühten Flüssigkeit 14 aufgenommen, wobei die hierzu benötigte Verdampfungswärme dem Verbrennungsgas 2 und der eingesprühten Flüssigkeit 14 entnommen wird. Das Verbrennungsgas 2 kann dadurch mehr Wärme aufnehmen, die eingesprühte Flüssigkeit 14 mehr Wärme abgeben. Vom Verbrennungsgas 2 wird Wasserdampf aus der eingesprühten Flüssigkeit 14 aufgenommen. Die dabei entstehende Verdampfungswärme wird dem Verbrennungsgas 2 entzogen, so daß die Temperaturzunahme des Verbrennungsgases 2 herabgesetzt wird. Das Verbrennungsgas 2 wird befeuchtet, und die eingesprühte Flüssigkeit 14 nimmt mengenmäßig ab. Im Verbrennungsgas 2 enthaltene Partikel werden durch die eingesprühte Flüssigkeit 14 herausgewaschen. Insgesamt verläßt das Verbrennungsgas 2 den ersten Raum 4 erwärmt, befeuchtet und gereinigt.

Indem das vorzugsweise etwa 90° heiße Abgas 3 während seiner Passage durch den zweiten Raum 7 fortwährend besprüht wird, geht die im Abgas 3 enthaltene fühlbare Wärme auf die eingesprühte kältere Flüssigkeit 15 über. Das Abgas 3 wird gekühlt und die eingesprühte Flüssigkeit 15 erwärmt. Die im Abgas 3 enthaltene latente Wärme, d.h. die Verdampfungswärme des im Abgas 3 mitgeführten Wasserdampfes, geht auf die eingesprühte Flüssigkeit 15 über. Das Abgas 3 kann dadurch mehr Wärme abgeben, die eingesprühte Flüssigkeit 15 mehr wärme aufnehmen. Der im Abgas 3 enthaltene Wasserdampf verflüssigt sich. Das Abgas 3 wird entfeuchtet und die eingesprühte Flüssigkeit 15 mit Wasser angereichert. Im Abgas 3 enthaltene Partikel werden durch die eingesprühte Flüssigkeit 15 herausgewaschen. Insgesamt verläßt das Abgas 3 den zweiten Raum 7 gekühlt, entfeuchtet und gereinigt.

Über die kommunizierend miteinander verbundenen Räume 4, 7 ergibt sich so ein Flüssigkeitskreislauf, so daß mit der zum Besprühen der beiden Räumen 4, 7 verwendeten gemeinsamen Flüssigkeit ein wirkungsvoller Wärmeaustausch zwischen Verbrennungsgas 2 und Abgas 3 erzielt wird.

Ein Teil der über die Kreislaufleitung 17 geförderten Flüssigkeitsmenge wird über eine mit einem Regulierventil 21 versehene Zirkulationsleitung 20 in Pfeilrichtung 22 wieder direkt dem Sumpf 16 zugeführt. Die Flüssigkeit wird dadurch ständig in Bewegung gehalten, so daß einem Absetzen und Ablagern von Partikeln in der Konditionierungsvorrichtung 1 und insbesondere im Sumpf 16 entgegengewirkt wird.

Die Räume 4, 7 sind mit einer oberhalb der Verbindung 10 vorgesehenen Überlaufleitung 23 ausgestattet, über die der maximale Flüssigkeitsspiegel 24 bzw. die Füllung der Räume 4, 7 begrenzt und überschüssige Flüssigkeit in einen Abwasserkanal 25 abgeführt wird. Damit keine zu saure Flüssigkeit abgeführt wird, ist in der Kreislaufleitung 17 eine Neutralisationseinrichtung 26 vorgesehen, in der die Flüssigkeit entsprechend neutralisiert wird. Die mit Partikeln angereicherte Flüssigkeit kann auch zur Wasseremulsionierung des Brennöls für z.B. einen Dieselmotor verwendet werden.

Die in der Kreislaufleitung 17 geförderte Flüssigkeit ist zusätzlich über eine Leitung 27 und mittels einer Pumpe 28 über einen Wärmetauscher 29 leitbar, mit dem der Flüssigkeit Wärme entzogen und z.B. an die Außenluft 30 abgegeben werden kann. Durch eine geregelte Wärmeabgabe am Wärmetauscher 29, d.h. durch geregeltes Umleiten der Flüssigkeit über den Wärmetauscher 29, kann die Temperatur des mit der Flüssigkeit wechselwirkenden, aus dem ersten Raum 4 ausströmenden Verbrennungsgases 2 geändert und insbesondere, zumindest in gewissen Grenzen, beliebig eingestellt werden.

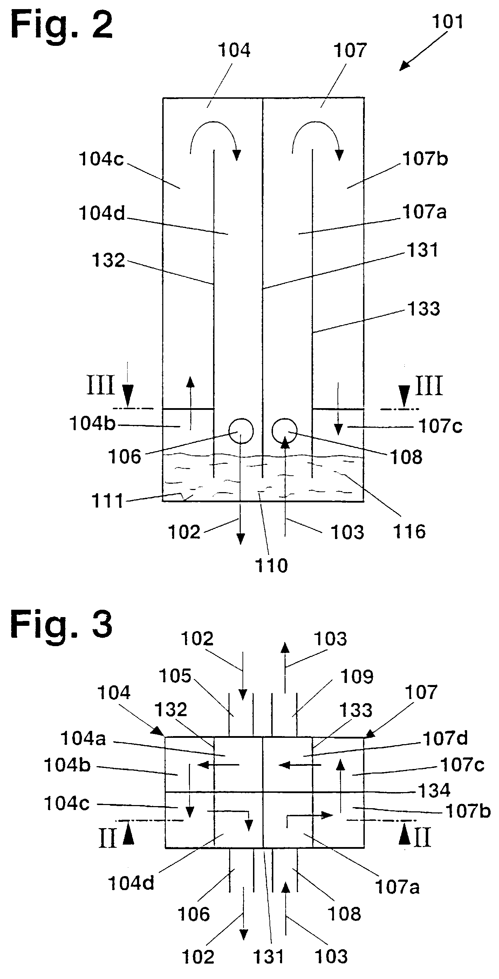

In den Fign. 2 und 3 ist ein erfindungsgemäßes Ausführungsbeispiel ei-ner Konditionierungsvorrichtung 101 gezeigt, deren beide über die Verbindung 110 kommunizierend miteinander verbundene Räume 104, 107 durch eine gemeinsame Trennwand 131 voneinander getrennt sind. Die beiden Räume 104, 107 sind weiterhin durch zwei Zwischenwände 132, 133 und eine durchgehende Zwischenwand 134 schachbrettartig in jeweils vier vertikale Teilräume 104a-104d bzw. 107a-107d unterteilt.

Der im folgenden geschilderte Durchfluß von Verbrennungsgas 102 und Abgas 103 durch die Konditionierungsvorrichtung 101 ist in den Fign. 2 und 3 durch Strömungspfeile veranschaulicht.

Das Verbrennungsgas 102 strömt über einen unteren Einlaß 105 in den ersten Teilraum 104a ein, strömt in diesem nach oben, bis es über eine obere Verbindungsöffnung in der Zwischenwand 132 in den zweiten Teilraum 104b gelangt. In diesem strömt es nach unten und tritt über eine untere Verbindungsöffnung in der Zwischenwand 134 in den dritten Teilraum 104c ein, den es nach oben durchströmt, bis es schließlich über eine obere Verbindungsöffnung in der Zwischenwand 132 in den vierten Teilraum 104d einströmt. Über den unteren Auslaß 106 tritt das im vierten Teilraum 104d nach unten geströmte Verbrennungsgas 102 aus.

Das Abgas 103 strömt über einen unteren Einlaß 108 in den ersten Teilraum 107a ein, strömt in diesem nach oben, bis es über eine obere Verbindungsöffnung in der Zwischenwand 133 in den zweiten Teilraum 107b gelangt. In diesem strömt es nach unten und tritt über eine untere Verbindungsöffnung in der Zwischenwand 134 in den dritten Teilraum 107c ein, den es nach oben durchströmt, bis es schließlich über eine obere Verbindungsöffnung in der Zwischenwand 133 in den vierten Teilraum 107d einströmt. Über den unteren Auslaß 109 tritt das im vierten Teilraum 107d nach unten geströmte Abgas 103 aus.

Die vertikalen Teilräumen 104a-104d bzw. 107a-107d werden somit vom Verbrennungsgas 102 bzw. vom Abgas 103 nacheinander und schlangenlinienförmig durchströmt. Das Verbrennungsgas 102 und das Abgas 103 können z.B. in den zweiten und dritten Teilräumen 104b, 104c bzw. 107b, 107c im Gleichstrom und dann im Gegenstrom von oben mit Flüssigkeit besprüht werden und abschließend z.B. im letzten Teilraum 104d bzw. 107d einer Tröpfchenabscheidung unterworfen werden, bevor sie über den Auslaß 106 bzw. 109 aus der Konditionierungsvorrichtung 101 austreten.

Da die Zwischenwände 132 und 133 unten kurz vor dem gemeinsamen Boden 111 enden und auch die unteren Verbindungsöffnungen in der Zwischenwand 134 bis zum gemeinsamen Boden 111 offen sind, sind alle Teilräume 104a-104d und 107a-107d miteinander kommunizierend verbunden, so daß ein gemeinsamer Flüssigkeits-"Sumpf" 115 gebildet ist.

## Patentansprüche

1. Verfahren zur Konditionierung eines Verbrennungsgases (2; 102), insbesondere von Verbrennungsluft, und eines Abgases (3; 103), die jeweils einer Heizeinrichtung oder Verbrennungskraftmaschine zu- bzw. von dieser abgeführt werden, wobei das Verbrennungsgas (2; 102) durch einen ersten Raum (4; 104) und das Abgas (3; 103) durch einen mit dem ersten Raum (4; 104) kommunizierend verbundenen zweiten Raum (7; 107) jeweils oberhalb der Verbindung (10; 110) beider Räume (4, 7; 104, 107) hindurchgeleitet und dabei mit einer sich unten in den Räumen (4, 7; 104, 107) befindenden Flüssigkeit (14, 15) besprüht werden, deren Flüssigkeitsniveau (24) auf einem Niveau höher als die Verbindung (10; 110) gehalten wird,
dadurch gekennzeichnet,
daß das Verbrennungsgas (102) und/oder das Abgas (103) jeweils mehrere Teilräume (104a-104d; 107a-107d) des ersten bzw. zweiten Raumes (104, 107) etwa vertikal nacheinander durchströmt, wobei die Strömungsrichtungen in nacheinander durchströmten Teilräumen (104a-104d; 107a-107d) eines Raumes (104, 107) jeweils einander entgegengesetzt sind.

2. Konditionierungsverfahren nach Anspruch 1, dadurch gekennzeichnet, daß das Verbrennungsgas (2; 102) und/oder das Abgas (3; 103) bezüglich der Sprührichtung der Flüssigkeit (14, 15) im Gegenstrom durch den jeweiligen Raum (4, 7; 104, 107) geleitet wird bzw. werden.

3. Konditionierungsverfahren nach Anspruch 1 oder 2, dadurch gekennzeichnet, daß die in den Räumen (4, 7; 104, 107) befindliche Flüssigkeit nahe ihres Flüssigkeitsspiegels (24) abgeleitet wird.

4. Konditionierungsverfahren nach einem der vorhergehenden Ansprüche, dadurch gekennzeichnet, daß die in den Räumen (4, 7; 104, 107) befindliche Flüssigkeit in Bewegung gehalten wird.

5. Konditionierungsverfahren nach einem der vorhergehenden Ansprüche, dadurch gekennzeichnet, daß die Flüssigkeit neutralisiert wird.

6. Konditionierungsverfahren nach einem der vorhergehenden Ansprüche, dadurch gekennzeichnet, daß die Flüssigkeit extern abkühlbar ist.

7. Vorrichtung (1; 101) zur Konditionierung eines Verbrennungsgases (2; 102), insbesondere von Verbrennungsluft, und eines Abgases (3; 103), die jeweils einer Heizeinrichtung oder Verbrennungskraftmaschine zu- bzw. von dieser abgeführt werden, zur Durchführung des Konditionierungsverfahrens nach einem der vorhergehenden Ansprüche, mit zwei über eine Verbindung (10; 110) miteinander kommunizierend verbundenen Räumen (4, 7; 104, 107), wobei das Verbrennungsgas (2; 102) durch den einen (ersten) Raum (4; 104) und das Abgas (3; 103) durch den anderen (zweiten) Raum (7; 107) jeweils oberhalb der Verbindung (10; 110) hindurchgeleitet und dabei mittels einer Sprüheinrichtung (12, 13) mit einer sich unten in den Räumen (4, 7; 104, 107) befindenden Flüssigkeit (14, 15) besprüht werden, deren Flüssigkeitsniveau (24) auf einem Niveau höher als die Verbindung (10; 110) gehalten wird,
dadurch gekennzeichnet,
daß die beiden Räume (4, 7; 104, 107) einen gemeinsamen Boden (11) aufweisen und daß einer oder beide Räume (104; 107) in mehrere, etwa vertikal verlaufende Teilräume (104a-104d; 107a-107d) unterteilt sind, die vom Verbrennungsgas (102) bzw. vom Abgas (103) nacheinander, insbesondere schlangenlinienförmig, durchströmt werden.

8. Konditionierungsvorrichtung nach Anspruch 7, dadurch gekennzeichnet, daß im zweiten Raum (7; 107) für das Abgas (3; 103) der Einlaß (8; 108) unterhalb des Auslasses (9) angeordnet ist.

9. Konditionierungsvorrichtung nach Anspruch 7 oder 8, dadurch gekennzeichnet, daß die Sprüheinrichtung (12, 13) im jeweiligen Raum (4, 7; 104, 107) oberhalb des jeweils höher liegenden Ein- oder Auslasses (5, 6; 7, 8; 106; 108) für das Verbrennungsgas (2) bzw. für das Abgas (3; 103) angeordnet ist.

10. Konditionierungsvorrichtung nach einem der Ansprüche 7 bis 9, gekennzeichnet durch eine in zumindest einem der Räume (4, 7; 104, 107) vorgesehene Überlaufleitung (23), die sich zwischen der Verbindung (10; 110) und dem jeweils am tiefsten liegenden Ein- oder Auslaß (5, 6; 7, 8; 102; 108) für das Verbrennungsgas (2; 102) bzw. für das Abgas (3; 103) befindet.

11. Konditionierungsvorrichtung nach einem der Ansprüche 7 bis 10, gekennzeichnet durch eine Kreislaufleitung (17), über die der jeweiligen Sprüheinrichtung (12, 13) die, vorzugsweise unten, in den Räumen (4, 7; 104, 107) befindliche Flüssigkeit zugeführt wird.

12. Konditionierungsvorrichtung nach einem der Ansprüche 7 bis 11, gekennzeichnet durch eine die Flüssigkeit neutralisierende Neutralisationseinrichtung (26).

13. Konditionierungsvorrichtung nach einem der Ansprüche 7 bis 12, gekennzeichnet durch eine zumindest die in den Räumen (4, 7; 104, 107) befindliche Flüssigkeit in Bewegung haltende Bewegungseinrichtung.

14. Konditionierungsvorrichtung nach Anspruch 13, dadurch gekennzeichnet, daß als Bewegungseinrichtung eine in einen oder in beide Räume (4, 7; 104, 107) mündende Zirkulationsleitung (20) vorgesehen ist, über die dem bzw. den Räumen (4, 7; 104, 107) entnommene Flüssigkeit, vorzugsweise im Kreislauf, den Räumen (4, 7; 104, 107) wieder zugeleitet wird.

15. Konditionierungsvorrichtung nach einem der Ansprüche 7 bis 14, gekennzeichnet durch einen Wärmetauscher (29), über den die Flüssigkeit leitbar ist.

16. Konditionierungsvorrichtung nach einem der Ansprüche 7 bis 15, dadurch gekennzeichnet, daß die beiden Räume (104, 107) durch eine gemeinsame Trennwand (131) voneinander getrennt sind.

17. Konditionierungsvorrichtung nach einem der Ansprüche 7 bis 16, dadurch gekennzeichnet, daß die mehreren Teilräume (104a-104d; 107a-107d) schachbrettartig nebeneinander angeordnet sind.

## Claims

1. A method of conditioning a combustion gas (2; 102), particularly combustion air, and of an exhaust gas (3; 103) which are respectively fed to or discharged from a heating apparatus or an internal combustion engine, the combustion gas (2; 102) being passed through a first chamber (4; 104) while the exhaust gas (3; 103) is passed through a second chamber (7; 107) communicating with the first chamber (4; 104), in each case via the connection (10; 110) of both chambers (4, 7; 104, 107), during which a liquid (14, 15) being sprayed is in the bottom of the chambers (4, 7; 104, 107), the level (24) of the said liquid being maintained at a level which is higher than the connection (10; 110), characterised in that the combustion gas (102) and/or the exhaust gas (103) respectively flowing through a plurality of partial chambers (104a to 104d; 107a to 107d) in the first and/or second chamber (104, 107) one after another and in a vertical direction, the directions of flow in successively traversed partial chambers (104a to 104d; 107a to 107d) of a chamber (104, 107) being respectively opposite to one another.

2. A conditioning method according to claim 1, characterised in that the combustion gas (2; 102) and/or the exhaust gas (3; 103) is/are passed through the respective chambers (4, 7; 104, 107) in counter-current to the direction in which the liquid (14, 15) is sprayed.

3. A conditioning method according to claim 1 or 2, characterised in that the liquid present in the chambers (4, 7; 104, 107) is drawn off close to its level (24).

4. A conditioning method according to one of the preceding claims, characterised in that the liquid present in the chambers (4, 7; 104, 107) is maintained in motion.

5. A conditioning method according to one of the preceding claims, characterised in that the liquid is neutralised.

6. A conditioning method according to one of the preceding claims, characterised in that the liquid can be externally cooled.

7. An apparatus (1; 101) for conditioning a combustion gas (2; 102), particularly of combustion air, and of an exhaust gas (3; 103) which are respectively fed to and/or discharged from a heating apparatus or internal combustion engine, for carrying out the conditioning method according to one of the preceding claims, the two chambers (4, 7; 104, 107) communicating with each other via a connection (10; 110), whereby the combustion gas (2; 102) is passed through one (first) chamber (4; 104) and the exhaust gas (3; 103) is passed through the other (second) chamber (7; 107), in each case above the connection (10; 110), and a liquid (14, 15) sprayed by means of a spray device (10, 12) is in the bottom of the chambers (4, 7; 104, 107) and the level (24) of which is maintained at a level which is higher than the connection (10; 110), characterised in that the two chambers (4, 7; 104, 107) have a common bottom (11) and in that one or both chambers (104; 107) is/are sub-divided into a plurality of substantially vertically extending partial chambers (104a to 104d; 107a to 107d), traversed one after the other, particularly in an undulating patter, by the combustion gas (102) and/or the exhaust gas (103).

8. A conditioning apparatus according to claim 7, characterised in that the inlet (8; 108) in the second chamber (7; 107) for the exhaust gas (3; 103) is disposed below the outlet (9).

9. A conditioning apparatus according to claim 7 or 8, characterised in that the spray device (12, 13) in the relevant chamber (4, 7; 104, 107) is situated above the respective higher inlet or outlet (5, 6; 7, 8; 106; 108) for the combustion gas (2) and/or for the exhaust gas (3; 103).

10. A conditioning apparatus according to one of the claims 7 to 9, characterised by, provided in at least one of the chambers (4, 7; 104, 107), an overflow pipe (23) disposed between the connection (10; 110) and the lowest inlet or outlet (5, 6; 7, 8; 102; 108) for the combustion gas (2, 102) and/or for the exhaust gas (3; 103).

11. A conditioning apparatus according to one of claims 7 to 10, characterised by a circuit pipe (17) through which the liquid disposed preferably in the bottom of the chambers (4, 7; 104, 107) is fed to the respective spray means (12, 13).

12. A conditioning apparatus according to one of claims 7 to 11, characterised by a neutralising means (26) for neutralising the liquid.

13. A conditioning apparatus according to one of claims 7 to 12, characterised by moving means for maintaining in motion a liquid present at least in the chambers (4, 7; 104, 107).

14. A conditioning apparatus according to claim 13, characterised in that the moving means provided is a circulating pipe (20) opening out into one or both chambers (4, 7; 104, 107) and through which the liquid drawn from the chamber or chambers (4, 7; 104, 107) is fed back to the chambers (4, 7; 104, 107) preferably by recycling.

15. A conditioning apparatus according to one of claims 7 to 14, characterised by a heat exchanger (29) through which the liquid can be passed.

16. A conditioning apparatus according to one of claims 7 to 15, characterised in that the two chambers (104; 107) are separated from each other by a common partition (131).

17. A conditioning apparatus according to one of claims 7 to 16, characterised in that the plurality of partial chambers (104a to 104d; 107a to 107d) are disposed beside one another in the manner of a chess board.

## Revendications

1. Procédé pour le conditionnement d'un gaz de combustion (2 ; 102), en particulier d'air de combustion, et d'un gaz d'échappement (3 ; 103), que l'on amène à, et respectivement que l'on évacue depuis, un dispositif de chauffage ou un moteur à combustion interne, dans lequel le gaz de combustion (2 ; 102) est passé à travers une première chambre (4 ; 104) et le gaz d'échappement (3 ; 103) est passé à travers une deuxième chambre (7 ; 107) qui communique avec la première chambre (4 ; 104), et cela respectivement au-dessus de la jonction (10 ; 110) des deux chambres (4, 7 ; 104, 107), et sont alors pulvérisés avec un liquide (14, 15) qui et se trouve en bas dans les chambres (4, 7 ; 104, 107) et dont le niveau de liquide (24) est maintenu à un niveau plus élevé que la jonction (10 ; 110),
caractérisé en ce que le gaz de combustion (102) et/ou le gaz d'échappement (103) traverse(nt) respectivement plusieurs chambres partielles (104a-104d ; 107a-107d) de la première ou de la deuxième chambre (104, 107) approximativement verticalement les unes après les autres, et les directions d'écoulement dans les chambres partielles (104a-104d ; 107a-107d) d'une chambre (104, 107) traversées les unes après les autres sont respectivement opposées les unes aux autres.

2. Procédé de conditionnement selon la revendication 1, caractérisé en ce que le gaz de combustion (2 ; 102) et/ou le gaz d'échappement (3 ; 103) est/sont mené(s) à travers la chambre respective (4, 7 ; 104, 107) à contre-courant par rapport à la direction de pulvérisation du liquide (14, 15).

3. Procédé de conditionnement selon l'une ou l'autre des revendications 1 et 2, caractérisé en ce que le liquide qui se trouve dans les chambres (4, 7 ; 104, 107) est prélevé au voisinage de sa surface (24).

4. Procédé de conditionnement selon l'une des revendications précédentes, caractérisé en ce que le liquide qui se trouve dans les chambres (4, 7 ; 104, 107) est maintenu en mouvement.

5. Procédé de conditionnement selon l'une des revendications précédentes, caractérisé en ce que le liquide est neutralisé.

6. Procédé de conditionnement selon l'une des revendications précédentes, caractérisé en ce que le liquide peut être refroidi à l'extérieur.

7. Appareil (1 ; 101) pour le conditionnement d'un gaz de combustion (2 ; 102), en particulier d'air de combustion, et d'un gaz d'échappement (3 ; 103), que l'on amène à, et respectivement que l'on évacue depuis, un dispositif de chauffage ou un moteur à combustion interne, pour la mise en oeuvre du procédé de conditionnement selon l'une des revendications précédentes, comprenant deux chambres (4, 7 ; 104, 107) communiquant l'une avec l'autre via une jonction (10 ; 110), dans lequel le gaz de combustion (2 ; 102) est passé à travers une (première) chambre (4 ; 104) et le gaz d'échappement (3 ; 103) est passé à travers l'autre (deuxième) chambre (7 ; 107) respectivement au-dessus de la jonction (10 ; 110) et sont alors pulvérisés au moyen d'un dispositif de pulvérisation (12, 13) avec un liquide (14, 15) qui se trouve en bas dans les chambres (4, 7 ; 104, 107), dont le niveau de liquide (24) est maintenu à un niveau plus élevé que la jonction (10 ; 110), caractérisé en ce que les deux chambres (4,7 ; 104, 107) comprennent un fond commun (11), et en ce que l'une ou les deux chambres (104 ; 107) est(sont) subdivisées en plusieurs chambres partielles (104a-104d ; 107a-107d) qui s'étendent approximativement verticalement, et qui sont traversées par le gaz de combustion (102), ou respectivement par le gaz d'échappement (103), les unes après les autres, et en particulier suivant un parcours en méandres.

8. Appareil de conditionnement selon la revendication 7, caractérisé en ce que dans la deuxième chambre (7 ; 107) pour le gaz d'échappement (3 ; 103) l'entrée (8 ; 108) est agencée au-dessous de la sortie (9).

9. Appareil de conditionnement selon l'une ou l'autre des revendications 7 et 8, caractérisé en ce que le dispositif de pulvérisation (12, 13) est agencé dans la chambre respective (4, 7 ; 104, 107) au-dessus de l'entrée ou de la sortie (5, 6 ; 7, 8 ; 106 ; 108), pour le gaz de combustion (2) ou respectivement pour le gaz d'échappement (3 ; 103), qui est située respectivement le plus en haut.

10. Appareil de conditionnement selon l'une des revendications 7 à 9, caractérisé par une conduite de trop-plein (23), prévue dans l'une au moins des chambres (4, 7 ; 104, 107) et qui est située entre la jonction (10 ; 110) et l'entrée ou la sortie (5, 6 ; 7, 8 ; 106 ; 108), pour le gaz de combustion (2 ; 102) ou respectivement pour le gaz d'échappement (3 ; 103), qui est située respectivement le plus en bas.

11. Appareil de conditionnement selon l'une des revendications 7 à 10, caractérisé par une conduite de recirculation (17) au moyen de laquelle le liquide qui se trouve dans les chambres (4, 7 ; 104, 107), de préférence en bas, est amené au dispositif de pulvérisation respectif (12, 13).

12. Appareil de conditionnement selon l'une des revendications 7 à 11, caractérisé par un dispositif de neutralisation (26) qui neutralise le liquide.

13. Appareil de conditionnement selon l'une des revendications 7 à 12, caractérisé par un dispositif de mise en mouvement qui maintient en mouvement le liquide qui se trouve dans les chambres (4, 7 ; 104, 107).

14. Appareil de conditionnement selon la revendication 13, caractérisé en ce que l'on prévoit à titre de dispositif de mise en mouvement une conduite de circulation (20) qui débouche dans l'une ou dans les deux chambres (4, 7 ; 104, 107), via laquelle le liquide prélevé de la ou des chambres (4, 7 ; 104, 107) est à nouveau ramené aux chambres (4, 7 ; 104, 107), de préférence en circuit fermé.

15. Appareil de conditionnement selon l'une des revendications 7 à 14, caractérisé par un échangeur de chaleur (29), à travers lequel peut être passé le liquide.

16. Appareil de conditionnement selon l'une des revendications 7 à 15, caractérisé en ce que les deux chambres (104, 107) sont séparées l'une de l'autre par une paroi de séparation commune (131).

17. Appareil de conditionnement selon l'une des revendications 7 à 16, caractérisé en ce que les plusieurs chambres partielles (104a-104d ; 107a-107d) sont agencées les unes à côté des autres à la manière d'un damier.
